(19) **Europäisches Patentamt / European Patent Office / Office européen des brevets**

(11) **EP 3 786 587 B1**

(12) **EUROPEAN PATENT SPECIFICATION**

(45) Date of publication and mention
of the grant of the patent:
**13.12.2023 Bulletin 2023/50**

(21) Application number: **20186619.1**

(22) Date of filing: **20.07.2020**

(51) International Patent Classification (IPC):
**G01C 21/34** (2006.01)    **G01C 21/36** (2006.01)
**B60W 30/06** (2006.01)    **B60W 30/095** (2012.01)
**G08G 1/16** (2006.01)    **G05D 1/02** (2020.01)

(52) Cooperative Patent Classification (CPC):
**G01C 21/3446; B62D 15/025; G01C 21/3407;
G01C 21/3602; G05D 1/0212**

(54) **PATH PLANNING FOR AUTONOMOUS AND SEMI-AUTONOMOUS VEHICLES**

WEGPLANUNG FÜR AUTONOME UND HALBAUTONOME FAHRZEUGE

PLANIFICATION DE TRAJECTOIRE POUR VÉHICULES AUTONOMES ET SEMI-AUTONOMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2019 US 201916553874**

(43) Date of publication of application:
**03.03.2021 Bulletin 2021/09**

(73) Proprietor: **Zenuity AB**
**413 46 Göteborg (SE)**

(72) Inventor: **MATSUDA, Takuro**
**Farmington Hills, MI 48335 (US)**

(74) Representative: **Zacco Sweden AB**
**P.O. Box 5581**
**Löjtnantsgatan 21**
**114 85 Stockholm (SE)**

(56) References cited:
**US-A1- 2018 356 819    US-A1- 2019 011 910**

**Description**

TECHNICAL FIELD

The present disclosure relates to autonomous driving (AD) and advanced driver-assistance systems (ADAS). More specifically, the present disclosure relates to path planning for a vehicle within a drivable area.

BACKGROUND

Today, many vehicles have a variety of driver support functions in the form of advanced driver assistance systems (ADAS). In addition, many of these support function form a basis for current and future autonomous drive (AD) functions. Examples of ADAS features or functions include lane departure warning systems, lane centring, lane keeping aid, pilot assist, lane change assistance, parking sensors, pedestrian protection systems, blind spot monitors, adaptive cruise control (ACC), anti-lock braking systems, and so forth. These functions supplement the traditional driver control of the vehicle with one or more warnings or automated actions in response to certain scenarios.

During these last few years, the development of autonomous vehicles has exploded and many different solutions are being explored. Today, development is ongoing in both autonomous driving (AD) and advanced driver-assistance systems (ADAS), i.e. semiautonomous driving, within a number of different technical areas within these fields. One such area is path planning, i.e. how to plan a path for the vehicle so that the vehicle can be manoeuvred safely with accuracy and consistency in a comfortable manner for the vehicle occupants.

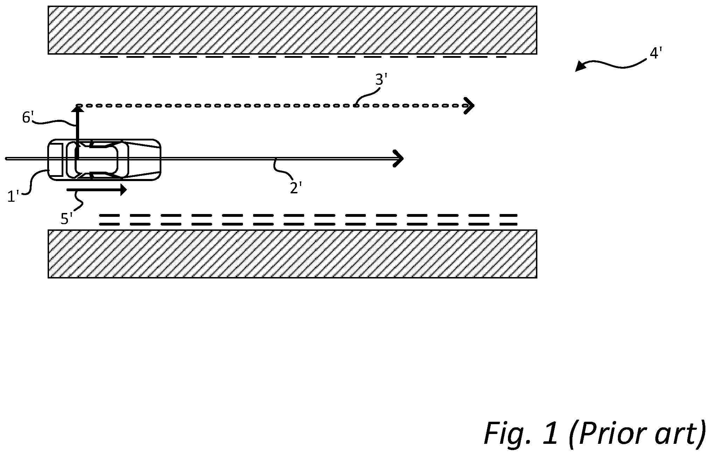

In general, conventional path planning system generates a target path for an autonomous vehicle from a given drivable area that is typically provided by a perception system or module. The target path is assumed to be sent to a vehicle control device that computes steering angles and such that the vehicle follows the path. A schematic illustration of a conventional path planning solution is illustrated in Fig. 1. An autonomous or semi-autonomous vehicle 1' is traveling (as indicated by arrow 5') on a road segment 4' along a first path 2'. Furthermore, a path planning system responsible for generating and updating the vehicle's target path generates an updated path 3' which is laterally displaced from the previous path 2' (as indicated by arrow 6'). In other words, the updated path 3' has a different shape from the path 2' at the previous time step which can cause erratic vehicle motion when an autonomous or semi-autonomous vehicle attempts to follow the updated path 3'.

Another example is provided in US 2018/0356819 A1, which discloses a method for autonomously operating a vehicle. The method includes receiving vehicle state data and vehicle object environment data, and generating an optimal path for the vehicle with a cost function based on the received data. Furthermore, the method includes identifying at least one critical condition constraint and modifying at least a portion of the optimal path based on the at least one critical condition constraint to result in a short-range trajectory portion.

US 2019/011910 A1 discloses a system for assisting with operating a driverless vehicle according to a path within virtual boundaries of a driving corridor.

Even though currently know solutions may produce adequate results in terms of safe path planning, there is always a need for improvements in the art, particularly improvements in terms of comfort and overall user experience.

SUMMARY

It is therefore an object of the present disclosure to provide a method for path planning for an autonomous or semi-autonomous vehicle, a computer-readable storage medium, a control device, and a vehicle comprising such a control device which alleviates all or at least some of the drawbacks of currently known solutions.

This object is achieved by means of a method for path planning for an autonomous or semi-autonomous vehicle, a computer-readable storage medium, a control device, and a vehicle comprising such a control device as defined in the appended claims.

According to a first aspect of the present disclosure, there is provided a method for path planning for an autonomous or semi-autonomous vehicle, according to claim 1. The method comprises obtaining a drivable area of a surrounding environment of the vehicle, and generating a path within the drivable area for a time step t based on a predefined set of characteristics for the path and a predefined set of constraints. The predefined set of constraints comprise at least one constraint based on a path generated for a previous time step.

The presented method enables for smoother and more stable path planning modules for autonomous and semi-autonomous vehicles as compared to conventional solutions. More specifically, the proposed method mitigates the risk of generating a target path that strongly deviates (at least within an area close to the vehicle) from a previous target path and thereby cause uncomfortable manoeuvres.

Further, the present inventor realized that by forming a constraint dependent the previous target path while updating the path, the risk of causing uncomfortable manoeuvres can be reduced as the possible lateral displacement of the updated path in the immediate proximity of the vehicle is effectively reduced.

The step of generating a path within the drivable area for the time step t comprises the following:

- computing a cost function, where the cost function is a mathematical representation of the predefined set of characteristics for the path,
- computing the set of constraints, wherein the set of constraints further comprise at least one constraint based on a boundary of the drivable area and at least one constraint based on vehicle characteristics,
- solving an optimization problem based on the computed cost function and the computed set of constraints,
- forming the path based on the solved optimization problem.

Stated differently, the path planning is formed as a quadratic programming problem. Accordingly, by using this formulation it is possible to derive the globally optimal solution in real time with efficient but conventional optimization algorithms.

The at least one constraint based on the path generated for the previous time step comprises two lateral boundaries extending from the path generated for the previous time step towards a traveling direction of the vehicle. The lateral boundaries can be understood as a left boundary and a right boundary and together they define an area between each other within which the updated path is allowed to be formed. In other words, the generated path for time t is not allowed to be formed outside of the lateral boundaries.

The two lateral boundaries have a first portion having longitudinal extension parallel to the path generated from the previous time step, and wherein the two lateral boundaries have a second portion having a shape based on a predefined function along a heading direction of the vehicle within the drivable area. The function may for example be quadratic or constantly expanding with the distance away from the vehicle. By expanding the allowable area within which an updated path may be formed in a region the updated path at time step t may deviate from the path generated for a previous time step t-1 but in a stable manner with reduced risk of jerk and erratic behaviour which negatively affects the comfort of the vehicle's occupants. The function may be dependent on at least one of a current vehicle speed, a current traffic scenario, a current geographical location of the vehicle, current weather conditions, and other vehicle characteristics (e.g. type of vehicle, user settings, and so forth).The user settings may for example be switching between driving styles such as "comfort", "sport", and "race", where different settings allow for different magnitudes of "jerk" or lateral acceleration. In reference to the predefined function being dependent on speed, one may consider a scenario where the vehicle is traveling for instance in 10 km/h and a different scenario when the vehicle is traveling in 30 km/h. In the latter scenario (30 km/h), the lateral boundaries may be closer together and thereby form a stricter requirement on the updated path in order to reduce the risk of uncomfortable manoeuvres (elevated lateral accelerations) being executed by the vehicle control system.

Still further, in accordance with yet another exemplary embodiment, the predefined set of constraints further comprise at least one of a minimum turning radius of the vehicle, a (longitudinal) length of the vehicle, a (lateral) width of the vehicle, a (vertical) height of the vehicle, a ground clearance of the vehicle, and at least one lane boundary.

According to a second aspect of the present disclosure, there is provided a (non-tranistory) computer-readable storage medium storing one or more programs configured to be executed by one or more processors of a vehicle control system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further, in accordance with a third aspect of the present disclosure, there is provided a control device for path planning for an autonomous or semi-autonomous vehicle, according to claim 6. The control device comprises control circuitry (may also be referred to as one or more processors) and associated memory devices. The control circuitry is configured to obtain a drivable area of a surrounding environment of the vehicle, and generate a path within the drivable area for a time step t based on a predefined set of characteristics for the path, and a predefined set of constraints. Moreover, the predefined set of constraints comprises at least one constraint based on a path generated for a previous time step. With this aspect of the disclosure, similar advantages and preferred features are present as in the previously discussed first aspect of the disclosure. According to a fourth aspect of the present disclosure, there is provided a vehicle comprising a perception system comprising at least one sensor for monitoring a surrounding environment of the vehicle. The vehicle further comprises a control device according to any one of the embodiments disclosed herein. With this aspect of the disclosure, similar advantages and preferred features are present as in the previously discussed first aspect of the disclosure.

Further embodiments of the disclosure are defined in the dependent claims.

These and other features and advantages of the present disclosure will in the following be further clarified with reference to the embodiments described hereinafter.

BRIEF DESCRIPTION OF THE DRAWINGS

Further objects, features and advantages of embodiments of the disclosure will appear from the following detailed description, reference being made to the accompanying drawings, in which:

Fig. 1 is a schematic top view illustration of a vehicle traveling on a road segment according to a prior art example.

Fig. 2 is a schematic top view illustration of a vehicle having a control device for path planning according to an exemplary embodiment of the present disclosure.

Fig. 3a - 3c are schematic top view illustrations of a vehicle having a control device for path planning according to an exemplary embodiment of the present disclosure.

Fig. 4 is a schematic block diagram representation of a method for path planning for an autonomous or semi-autonomous vehicle in accordance with an embodiment of the present disclosure.

Fig. 5 is a schematic flow chart representation of a method for path planning for an autonomous or semi-autonomous vehicle in accordance with an embodiment of the present disclosure.

Fig. 6 is a schematic side view of a vehicle having a control device for path planning for an autonomous or semi-autonomous vehicle in accordance with an embodiment of the present disclosure.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components. A vehicle is in the present context to be understood as a road vehicle such as a car, a bus, a truck, construction vehicles, and the like.

In general, there are two major approaches to a path planning problem. The first being a sample based approach where drivable area is discretized into a number of cells or nodes. Target path is found by conducting a type of graph-based search from start to end regions. The other approach is to solve an optimization problem with a cost function and a set of constraints. The cost function represents the characteristics that users desire for the path, and the constraints include the limitation of drivable area within which the path is allowed to exist. Accordingly, the optimal path is found as the one that minimizes the cost function. The present disclosure is particularly related to the latter approach.

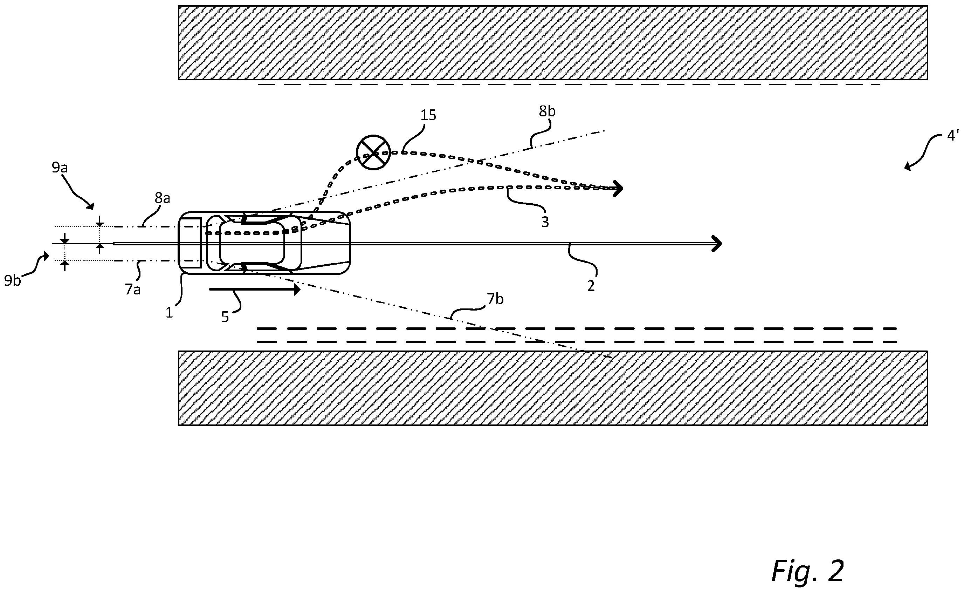

Fig. 2 is a schematic top view illustration of a vehicle 1 traveling on a road segment 4 in accordance with an exemplary embodiment of the present disclosure. Moreover, Fig. 2 serves to at least generally elucidate a method or process for path planning for an autonomous or semi-autonomous vehicle according to an exemplary embodiment of the present disclosure. Thus, the illustrated vehicle 1 is to be interpreted as an autonomous vehicle or a semi-autonomous vehicle (i.e. a vehicle equipped with suitable advanced driver-assistance systems) having a control device for path planning according to an exemplary embodiment of the present disclosure. A path may in the present context to be a sequence of vehicle configurations beginning and ending with boundary configurations. These boundary configurations can also be referred to as initial and terminating. In other words, a planned path can be understood as a series of positions or configurations that are planned to be assumed by the vehicle 1 within a drivable area.

As mentioned, the vehicle 1 is considered to be traveling on a road segment 4 (as indicated by the arrow 5 extending along the vehicle). The vehicle 1 is configured to follow a target path within the drivable area. The drivable area is typically provided by a perception system or perception module of the vehicle 1. A perception system is in the present context to be understood as a system responsible for acquiring raw sensor data from on sensors such as cameras, LIDARs and RADARs, ultrasonic sensors, and converting this raw data into scene understanding. Naturally, the drivable area may be determined by additional means such as high definition (HD) map data, location data acquired from a localization system (e.g. a GNSS), and so forth.

The path planning module (i.e. control device) of the vehicle 1 obtains a drivable area of the surrounding environment. The drivable area may for example be one or more lanes of the road. Then, a path is generated within the drivable area with a predefined sample rate. If the sample rate is for example 10 Hz, then the path generating module updates the target path every 0.1 seconds as the vehicle 1 is traveling.

In more detail, a path is generated for a time step t based on a predefined set of characteristics for the path and further based on a predefined set of constraints, where the predefined set of constraints comprise at least one constraint based (dependent) on a path generated from a previous time step t-1. The predefined set of characteristics can be construed as control parameters imposed in order to generate a smooth path without unnecessary hard accelerations or jerk, i.e. criteria that are more related to user experience than physical vehicle constraints. The predefined set of characteristics may for example comprise at least one of a path smoothness level, a distance to lane center, and a length of the path. The predefined set of constraints may on the other hand further comprise at least one of a minimum turning radius of the vehicle 1, a (longitudinal) length of the vehicle 1, a (lateral) width of the vehicle 1, a (vertical) height of the vehicle 1, a ground clearance of the vehicle 1, and at least one lane boundary.

In reference to the lane boundary constraint(s), it should be interpreted as that the updated path may in some scenarios not be allowed to run outside of a specific lane of the road segment 4 that the vehicle 1 is traveling on, even if it would be "allowed" by the lateral boundaries 7, 8 (i.e. 7a, 7b, 8a, 8b) that are formed based on the previous path 2. The lateral boundaries 7, 8 will be further described in the following.

The presently disclosed path updating process can be understood as a causal process, where the updated path 3 depends on the path 2 generated for one or more preceding time steps. Thus, it can be said that the updated path 3 generated at time step t is dependent on the location of the path generated for one or more previous time steps t-N, N being a positive integer larger than zero. More specifically, the at least one constraint based on the path 2 generated for the previous time step comprises two (virtual) lateral boundaries 7, 8 (i.e. 7a, 7b, 8a, 8b) extending from the path 2 generated for the previous time step towards a traveling direction 5 of the vehicle 1. In one exemplary embodiment, the at least one constraint based (dependent) on a path generated for a previous time step is based on a path generated for a directly preceding time step t-1.

Accordingly, the updated path is only allowed to exist in an area between the two lateral boundaries 7, 8 which will cause the updated path 3 to retain at least some of the shape of the previous path 2, thus enhancing the stability. In other words, an area between the two lateral boundaries 7, 8 define an allowable area within which at least a portion of the path for time step t is allowed to be formed. As an example, an alternative path 15 that violates the above-mentioned constraint is illustrated. Thus, the constraint enforced by the lateral boundaries 7, 8, the updated path 3 is more likely to result in a smoother and more stable ride as compared to if no constraints dependent on the path 2 generated for the previous time step were imposed (as indicated by alternative path 15).

Further, a lateral distance between the path 2 generated for the previous time step and the lateral boundaries 7, 8 may be dynamic, i.e. the distance between the lateral boundaries 7, 8 may be dynamic. More specifically, if the portion of the path 3 for time step t cannot be formed within the allowable area between the two lateral boundaries 7, 8, the distance between them can be increased up until a predefined maximum distance or until the portion of the path can be formed within the allowable area. In particular, the distance between the second portions 7b, 8b of the lateral boundaries can be increased. The two lateral boundaries 7, 8 may furthermore have a first portion 7a, 8a having longitudinal extension parallel to the path 2 generated from the previous time step, and wherein the two lateral boundaries have a second portion 7b, 8b having a shape based on a predefined function along a heading direction 5 of the vehicle 1 within the drivable area 4. Here, the second portion 7b, 8b of the lateral boundaries have a funnel shaped extension along the heading direction 5 of the vehicle 1. More specifically, the funnel-shaped extension is arranged so to expand (extend away from each other) with an increasing distance away from the vehicle 1. Thus, the lateral boundaries can be said to further depend on a distance relative to the vehicle 1. Even though the first and second portions of the lateral boundaries meet at the rear axle of the vehicle 1 in the illustrated examples, the skilled reader readily understands that this is merely an alternative and that the second portion 7b, 8b may instead originate from the front axle, a centre of mass of the vehicle 1, the front of the vehicle 1, or any other suitable point of origin.

Further, the set of constraints, upon which the updated path is based, may further comprise at least one of a minimum turning radius of the vehicle, a (longitudinal) length of the vehicle, a (lateral) width of the vehicle, a (vertical) height of the vehicle, and a ground clearance of the vehicle. In other words, the updated path is preferably such that it does not violate the physical capabilities of the vehicle 1.

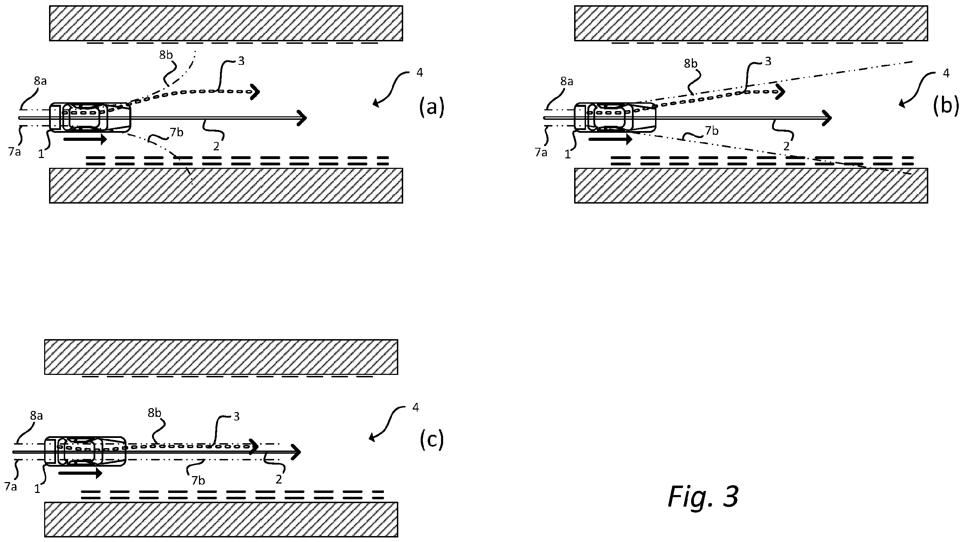

Figs. 3a - 3c show three different exemplary embodiments of a vehicle 1 having a control device for path planning. The figures 3a, 3b, 3c serve to exemplify various realizations of the constraint for generating an updating path 3 which is imposed by the lateral boundaries 7b, 8b, 9a, 9b. More specifically, the figures 3a, 3b, 3c show various alternative shapes of the second portion 7b, 8b of the lateral boundaries, i.e. alternative functions defining the shape of the lateral boundaries 7, 8.

In Fig. 3a, the second portion 7b, 8b of the lateral boundaries have a parabolic shape. Thus, it can be said that the at least one constraint based on the path generated for a previous time step is further based on a quadratic function. Analogously, Fig. 3b illustrates an example embodiment in which the second portion 7b, 8b of the lateral boundaries have a funnel shape (as in Fig. 2). In other words, the at least one constraint based on the path 2 generated for a previous time step is further based on a linear function. Moreover, Fig. 3c illustrates an example embodiment in which the second portion 7b, 8b of the lateral boundaries are parallel to each other along a longitudinal axis of the vehicle 1. More specifically, the second portion 7b, 8b of the lateral boundaries run in parallel with the path 2 generated for the previous time step and are spaced laterally from the path 2 generated for the previous time step with a predefined distance.

Stated differently, for the region behind the ego position (i.e. current position of the ego-vehicle 1), a constraint is formed around the previous path 2 that is a path 2 generated at the previous computation time. Width of the constraint is selected such that the updated path 3 is allowed to exist only in the proximity of the previous path 2. For the region ahead of the ego position, the width of the constraint is expanded like a funnel (e.g. Fig. 2 and Fig. 3b), so to allow the updated path 3 to be optimized based on e.g. a cost function and other constraints. Optionally, this constraint can be allowed to be violated only when the optimized path 3 cannot be found without the violation.

Moreover, the rate of the funnel expansion may be a constant value with respect to distance from the ego vehicle 1 (e.g. Fig. 2 and Fig. 3b. If the rate is smaller, the updated path 3 tends to retain the shape of the previous path 2, thus enhancing the stability. In a special case, one can set the rate to be zero (e.g. Fig. 3c), meaning the funnel does not expand, instead, the lateral boundaries are formed around the previous path 2 even for the region to the front of the vehicle 1.

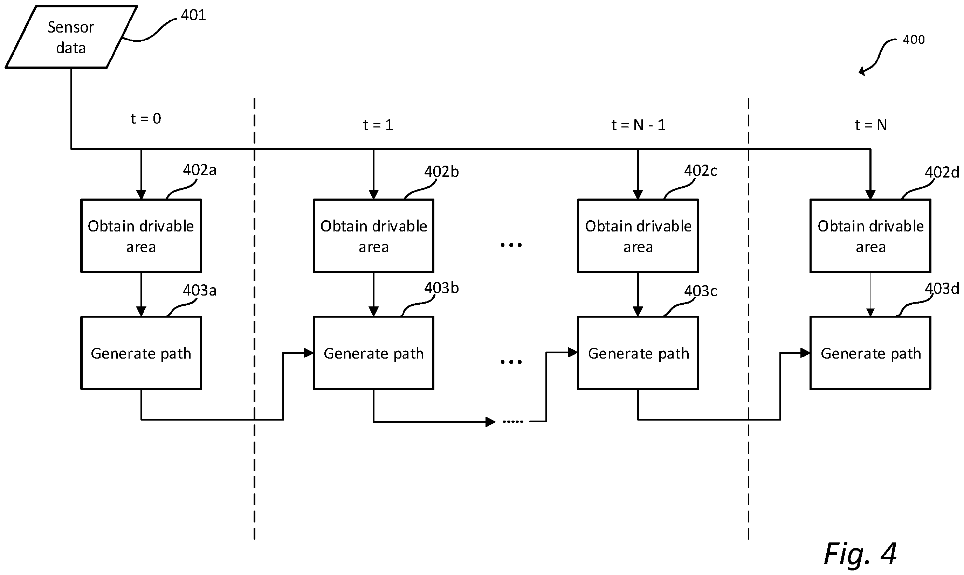

Fig. 4 is a schematic block diagram 400 representation of a method for path planning for an autonomous or semi-autonomous vehicle according to an exemplary embodiment of the present disclosure. The block diagram 400 illustrates how the path generated/updated at each time step t = k, k = [1, 2 ... N] depends on the paths generated at one or more previous time steps t = k - m, m = [1, 2 ... N - 1], m ≤ k. The method comprises obtaining 402a-d a drivable area of a surrounding environment of the vehicle. The term obtaining is herein to be interpreted broadly and encompasses receiving, retrieving, collecting, acquiring, and so forth.

The drivable area is determined based on sensor data 401 retrieved from one or more sensor devices arranged to monitor a surrounding environment of the vehicle. As mentioned the drivable area may comprise one or more lanes of a road segment, such as e.g. a highway stretch. Further, the method comprises generating 403a-d a path within the drivable area for each time step t = k based on a predefined set of characteristics for the path and a predefined set of constraints. As mentioned, the predefined characteristics for the path are more related to comfort aspects (lane smoothness, distance to other objects, distance to boundaries, distance to lane centre, etc.), i.e. the characteristics can be understood as optimization parameters. Moreover, the characteristics may be dynamic (i.e. dependent on a current scenario such as e.g. traveling on a highway at high speed or dense urban area at low speed). The constraints are one the other hand more related to limitations such as physical limitations of the vehicle (e.g. turning radius), safety (e.g. traffic monitoring for collision avoidance), and in particular to the limitations imposed by the path generated for a previous time step as described in the foregoing.

The constraints may to some extent be construed as static limitations which should not be violated (e.g. the vehicle cannot turn harder than its minimum turning radius, or the vehicle cannot pass through an area more narrow than the width of the vehicle). However, in some exemplary embodiments, the constraint based on the path generated for a previous time step is a soft constraint, i.e. it may be violated if one or more other predefined criteria are fulfilled (e.g. to avoid collision). In other words, the updated path for time step t may in some predefined scenarios be allowed to be formed outside of the lateral boundaries (ref. 7, 8 in Fig. 2).

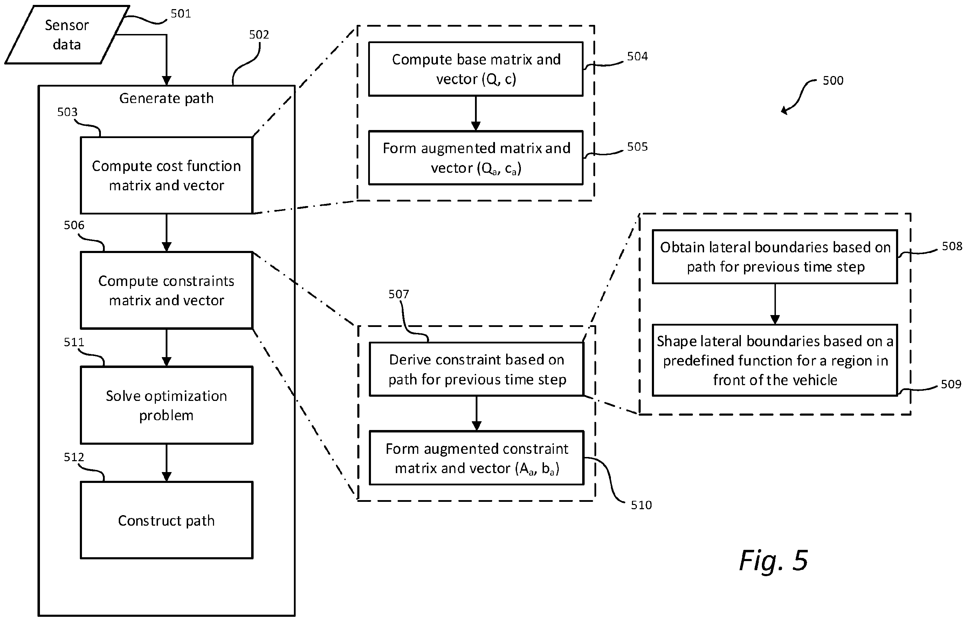

Fig. 5 is a schematic flow chart representation of a method 500 for path planning for an autonomous or semi-autonomous vehicle in accordance with an embodiment of the present disclosure. The following description will focus on the path generation step 502, however, as already exemplified in the foregoing the path can be said to be generated at least partly based on sensor data 501 that for example can be provided by a perception system of the vehicle. Once the path is generated, the method may further comprise controlling the vehicle to execute the generated 502 path.

Moving on, the path generation 502 is approached as an optimization problem with a cost function and a set of constraints. The cost function represents the characteristics that users desire for the path, and the constraints include the limitation of drivable area within which the path is allowed to exist. The optimal path is then found as the one that minimizes the cost function.

In many cases, and in practical implementations, the problem is formulated as a quadratic programming problem:

Minimizing cost function:

$$J = \min_{w}[w^T Q w + c^T w] \tag{1}$$

Subject to constraints:

$$Aw \leq b \tag{2}$$

where w is the parameter vector to be optimized, Q is a weight matrix, c is a weight vector, A is a constraints matrix, and b is a constraints vector.

The parameter vector determines the shape of the target path. For example, when the path is modeled by polynomial, the vector is polynomial coefficients. An advantage of this type of approach is that the optimal solution can be found in real time with efficient algorithms. An example of a specific implementation of a quadratic programming problem will be discussed in reference to Fig. 5 in the following.

In order to add the constraint based on the path generated for the previous time step, a modification is made to the formulation of the above mentioned optimization problem. More specifically, the equations (1), (2) are updated:

$$J = \min_{w_a}[w_a^T Q_a w_a + c_a^T w_a] \tag{3}$$

$$A_a w_a \leq b_a \tag{4}$$

where $w_a$ is the parameter vector to be optimized, and that is augmented from w in equations (1) and (2):

$$w_a = \begin{bmatrix} w \\ \varepsilon \end{bmatrix} \tag{5}$$

$Q_a$ is the augmented cost matrix and $c_a$ is the augmented cost vector from Q and c in equation (1), respectively:

$$Q_a = \begin{bmatrix} Q & 0 \\ 0 & 0 \end{bmatrix}, c_a = \begin{bmatrix} c \\ \rho \end{bmatrix} \tag{6}$$

where $\rho$ is the weight on the (soft) constraint based on the path generated for a previous time step. $A_a$ is the augmented constraint matrix and $b_a$ augmented constraint vector from A, and b in equation (2), respectively:

$$A_a = \begin{bmatrix} A & -E \\ 0 & -1 \end{bmatrix}, b_a = \begin{bmatrix} b \\ 0 \end{bmatrix} \tag{6}$$

Moving on, the method 500 comprises computing the cost function matrix and cost function vector are computed 503. In the present context the cost function can be understood as a mathematical representation of desired characteristics of a target path. Such characteristics may for example be a specific "smoothness" of the path, closeness to lane centre, overall length of the path, and so forth. The cost function values are numerically computed in a discrete space (or time) in order to compute a matrix Q and a vector c for the above mentioned Quadratic Programming problem.

In more detail, the step of computing 503 the cost function matrix and vector comprises computing 504 the "base" matrix and vector (Q, c) and then forming the augmented matrix and vector ($Q_a$, $c_a$).

Further, the method comprises computing 506 the set of constraints, where the set of constraints further comprise at least one constraint based on a boundary of the drivable area and at least one constraint based on vehicle characteristics. More specifically, a constraints matrix and constraints vector are computed 506. Some constraints are derived from drivable area boundaries in order to ensure that optimized path exists within the drivable area (e.g. within one or more lanes on a road segment). Additionally, one may require the curvature of the path to be below a certain threshold (e.g. minimum turning radius of vehicle).

Still further, the step of computing 506 the constraints matrix and vector, further comprises deriving 507 the at least one constraint based on a path generated for a previous time step and a predefined function. This constraint may also be referred to as the lateral boundaries (see e.g. ref. 7, 8 in Fig. 2). Thus, the method 500 further comprises obtaining 508 lateral boundaries based on the path from the previous time step and shaping 509 the lateral boundaries based on a predefined function (see examples in Fig. 3a, 3b, and 3c) for a region in front of the vehicle. For example, if the lateral boundaries are to be funnel shaped for the region in front of the vehicle, the expansion of the distance between the lateral boundaries is increased proportional to the distance from the vehicle.

Thus, once the "funnel" constraint is derived 507, an augmented constraints matrix and constraints vector ($A_a$, $b_a$) is formed 510. Next, the optimization problem is solved 511. This may be understood as minimizing the cost function given the predefined set of characteristics and the predefined set of constraints. In more detail, this step 511 solves the quadratic programming problem discussed in the foregoing. For this task conventional algorithms that are efficient and numerically stable may be used.

Further, a target path is constructed 512 from the solution 511. Depending on the way the quadratic programming problem is formulated, the output of the optimization 511 may be a set of coefficients of polynomial, a sequence of control inputs to the ego vehicle motion model, or some weights to form a shape of the path.

A conventional approach for path optimization one can use Model Predictive Control (MPC), where the cost function is set up as:

$$V(k) = \sum \|\hat{z}(k+i|k) - r(k+1|k)\|^2_{Q(i)} + \sum \|\Delta\hat{u}(k+i|k\|^2_{R(i)} \qquad (7)$$

where $\hat{z}$ is the estimated model trajectory, r is the reference trajectory, and $\Delta\hat{u}$ is the change of input.

Model Predictive Control gives control inputs that minimizes this cost function. First term is a performance index that requires the resulting motion to be close the target motion (e.g. reference trajectory). Second term is a stabilization index that has a role to suppress the change of control inputs over time, i.e. it tries to maintain the current level of control input, which leads to stabilize the motion.

However, the cost function has an inherent trade-off between the performance index and stabilization index. For example, when priority is placed on the stability with a greater weighting factor, the performance is degraded, leading to the situation where the change of the updated target path from previous path is suppressed successfully, but the path fails to retain desired characteristics. In the present disclosure, with the use of the constraint based on the path generated at a previous time step (i.e. lateral boundaries) acting as a soft constraint that can be violated only when necessary, the conventional trade-off between performance and stability can be overcome.

Executable instructions for performing these functions are, optionally, included in a non-transitory computer-readable storage medium or other computer program product configured for execution by one or more processors.

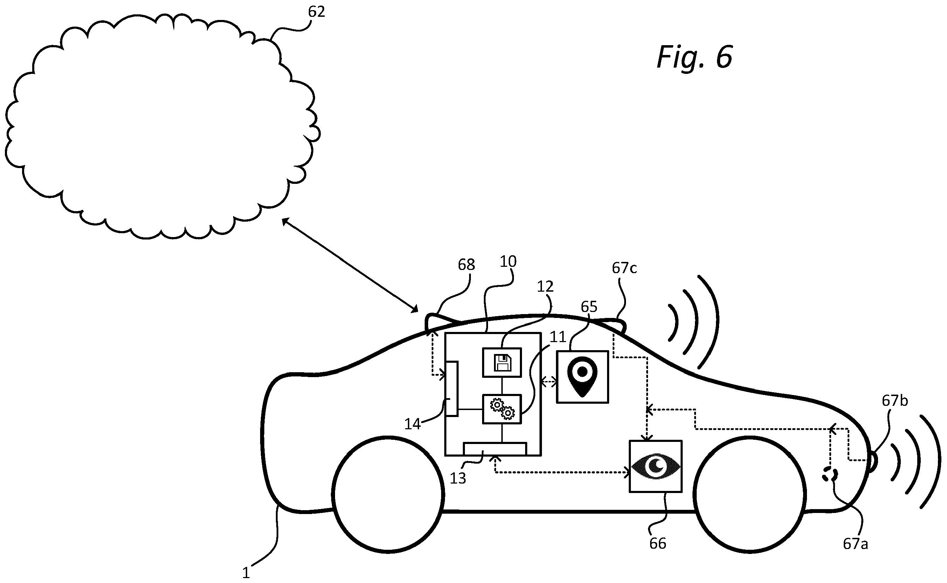

Fig. 6 is a schematic side view of a vehicle having a control device 10 for path planning for an autonomous or semi-autonomous vehicle 1. The vehicle 1 further comprises a perception system 66 and a localization system 65 in communicative connection with the control device. A perception system 66 is in the present context to be understood as a system responsible for acquiring raw sensor data from on sensors 67a, 67b, 67c such as cameras, LIDARs and RADARs, ultrasonic sensors, and converting this raw data into scene understanding. The localization system 65 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for path planning for an autonomous or semi-autonomous vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain (via the sensor interface 13 or communication interface 14) a drivable area of a surrounding environment of the vehicle 1. The drivable area may for example be defined by road boundaries or lane boundaries as detected and determined by the perception system 66 and the associated sensor devices 67a-c. However, in alternative embodiments (not shown) the control device 10 may receive raw data directly from one or more sensor devices 67a-c, and the determination of a drivable area may be performed by a dedicated module of the control device 10 based on the received sensor data. The control circuitry 11 is further configured to generate a path within the drivable area for a time step t based on a predefined set of characteristics for the path and a predefined set of constraints. The set of constraints comprise at least one constraint based on a path generated for a previous time step.

Further, the vehicle 1 may be connected to external network(s) 62 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

In summary, in order to alleviate the problem of erratic vehicle behaviour during path planning, the present disclosure introduces an additional constraint that has the following attributes.

For the region behind the ego position, constraint is formed around the previous path that is a path generated at the previous computation time. Width of the constraint (lateral boundaries) is predefined and narrow such that the updated path is allowed to exist only in the proximity of the previous path.

However, for the region ahead of the ego position, the width of the constraint (lateral boundaries) is expanded like a funnel (or according any other suitable function), so to allow the updated path to be optimized based on cost function and other constraints. Moreover, as an option this constraint is allowed to be violated only when the optimized path cannot be found without the violation.

Further, for the constraint attribute in the region ahead of the vehicle one can set up the rate of the funnel expansion being a constant value with respect to distance from the ego vehicle. If the rate of the funnel expansion is reduced, the updated path tends to retain the shape of the previous path, thus enhancing the stability. In an exemplary embodiment the rate of the funnel expansion is zero, meaning the funnel does not expand, instead, the constraint is formed around the previous path even for the region in front of the vehicle. In front of the vehicle is in the present context to be interpreted as the region in front of the vehicle in the vehicle's traveling direction. Thus, if the vehicle is going in reverse, then the "region in front of the vehicle" is actually the region "behind" the vehicle.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein. It should be appreciated that the sensor interface 13 may also provide the possibility to acquire sensor data directly or via dedicated sensor control circuitry 66 in the vehicle. The communication/antenna interface 14 may further provide the possibility to send output to a remote location (e.g. remote operator or control centre) by means of the antenna 68. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to determine a drivable area of a surrounding environment of the vehicle 1. The different features and steps of the embodiments may be combined in other combinations than those described.

## Claims

1.   A method (400, 500) for path planning for an autonomous or semi-autonomous vehicle, the method comprising:

obtaining (402a-d) a drivable area of a surrounding environment of the vehicle;
generating (403a-d, 502) a target path within the drivable area at a time step t based on a predefined set of characteristics for the target path and a predefined set of constraints, wherein the predefined set of characteristics is
related to comfort aspects of the target path, and wherein the predefined set of characteristics comprises at least one of a target path smoothness level, a distance to lane centre, and a length of the target path;
wherein the step of generating (403a-d, 502) the target path within the drivable area at the time step t comprises:

computing (503) a cost function, wherein the cost function is a mathematical representation of the predefined set of characteristics for the target path;
computing (506) the predefined set of constraints, wherein the predefined set of constraints further comprise at least one constraint based on a boundary of the drivable area and at least one constraint based on vehicle characteristics;
solving (511) an optimization problem based on the computed cost function and the computed predefined set of constraints; and
forming (512) the target path based on the solved optimization problem;
**characterized in that** the predefined set of constraints comprises at least one constraint based on a target path (2) generated at a previous time step; wherein that the at least one constraint based on the target path generated at the previous time step comprises two lateral boundaries (7a, 7b, 8a, 8b) extending from the target path generated at the previous time step towards a traveling direction of the vehicle;
wherein an area between the two lateral boundaries (7a, 7b, 8a, 8b) defines an allowable area within which at least a portion of the target path at the time step t is allowed to be formed;
wherein the two lateral boundaries (7a, 7b, 8a, 8b) have a first portion (7a, 8a) having a longitudinal extension parallel to the target path generated at the previous time step, and that the two lateral boundaries have a second portion (8a, 8b) having a shape based on a predefined function along a heading direction of the vehicle within the drivable area, the second portion (8a, 8b) of the two lateral boundaries (7a, 7b, 8a, 8b) having a funnel-shaped extension along the heading direction of the vehicle within the drivable area, the funnel-shaped extension being arranged so as to expand with a distance away from the vehicle.

2.   The method (400, 500) according to claim 1, further comprising:
if the portion of the target path at time step t cannot be formed within the allowable area between the two lateral boundaries (7a, 7b, 8a, 8b), increasing a distance between the lateral boundaries until the portion of the target path can be formed within the allowable area.

3.   The method (400, 500) according to any one of the preceding claims, wherein the at least one constraint based on a target path generated at a previous time step is based on a target path generated at a directly preceding time step t-1.

4. The method (400, 500) according to any one of the preceding claims, wherein the predefined set of constraints further comprise at least one of a minimum turning radius of the vehicle, a length of the vehicle, a width of the vehicle, a height of the vehicle, a ground clearance of the vehicle, and at least one lane boundary.

5. A computer-readable storage medium storing one or more programs configured to be executed by one or more processors of a vehicle control system, the one or more programs comprising instructions for performing the method (400, 500) according to any one of the preceding claims.

6. A control device (10) for path planning for an autonomous or semi-autonomous vehicle (1), the control device (10) comprising control circuitry (11) configured to:

> obtain a drivable area of a surrounding environment of the vehicle (1);
> generate a target path (3) within the drivable area at a time step t based on a predefined set of characteristics for the target path, and a predefined set of constraints, wherein the predefined set of characteristics is related to comfort aspects of the target path, and wherein the predefined set of characteristics comprises at least one of a target path smoothness level, a distance to lane centre, and a length of the target path;
> wherein the control circuitry (11) is further configured to generate the target path (2) within the drivable area at the time step t by:

>> computing a cost function comprising the predefined set of characteristics for the target path (3);
>> computing the predefined set of constraints, wherein the predefined set of constraints further comprise at least one constraint based on a boundary of the drivable area and at least one constraint based on vehicle characteristics;
>> solving an optimization problem based on the computed cost function and the computed predefined set of constraints; and
>> forming the target path (3) based on the solved optimization problem;
>> **characterized in that** the predefined set of constraints comprises at least one constraint based on a target path (2) generated at a previous time step; wherein

> the at least one constraint based on the target path generated at the previous time step comprises two lateral boundaries (7a, 7b, 8a, 8b) extending from the target path generated at the previous time step towards a traveling direction of the vehicle;
> wherein an area between the two lateral boundaries (7a, 7b, 8a, 8b) defines an allowable area within which at least a portion of the target path at the time step t is allowed to be formed;
> wherein the two lateral boundaries (7a, 7b, 8a, 8b) have a first portion (7a, 8a) having a longitudinal extension parallel to the target path generated at the previous time step, and that the two lateral boundaries have a second portion (8a, 8b) having a shape based on a predefined function along a heading direction of the vehicle within the drivable area, the second portion (8a, 8b) of the two lateral boundaries (7a, 7b, 8a, 8b) having a funnel-shaped extension along the heading direction of the vehicle within the drivable area, the funnel-shaped extension being arranged so as to expand with a distance away from the vehicle.

7. A vehicle (1) comprising:

> a perception system (66) comprising at least one sensor (67a-c) for monitoring a surrounding environment of the vehicle;
> a control device (10) according to claim 6.

**Patentansprüche**

1. Verfahren (400, 500) zur Wegplanung für ein autonomes oder halbautonomes Fahrzeug, wobei das Verfahren Folgendes umfasst:

> Erlangen (402a-d) einer befahrbaren Fläche einer Umgebung des Fahrzeugs;
> Erzeugen (403a-d, 502) eines Zielwegs innerhalb der befahrbaren Fläche zu einem Zeitschritt t basierend auf einem vordefinierten Satz von Eigenschaften für den Zielweg und einem vordefinierten Satz von Einschränkungen, wobei der vordefinierte Satz von Eigenschaften mit Komfortaspekten des Zielwegs verbunden ist und wobei der vordefinierte Satz von Eigenschaften mindestens eines von einem Ebenheitsgrad des Zielwegs, einem Abstand zur Mitte des Fahrstreifens und einer Länge des Zielwegs umfasst;

wobei der Schritt des Erzeugens (403a-d, 502) des Zielwegs innerhalb der befahrbaren Fläche zu dem Zeitschritt t Folgendes umfasst:

Berechnen (503) einer Kostenfunktion, wobei die Kostenfunktion eine mathematische Darstellung des vordefinierten Satzes von Eigenschaften für den Zielweg ist;

Berechnen (506) des vordefinierten Satzes von Einschränkungen, wobei der vordefinierte Satz von Einschränkungen ferner mindestens eine Einschränkung, die auf einer Begrenzung der befahrbaren Fläche basiert, und mindestens eine Einschränkung, die auf Fahrzeugeigenschaften basiert, umfasst;

Lösen (511) eines Optimierungsproblems basierend auf der berechneten Kostenfunktion und dem berechneten vordefinierten Satz von Einschränkungen; und

Bilden (512) des Zielwegs basierend auf dem gelösten Optimierungsproblem;

**dadurch gekennzeichnet, dass** der vordefinierte Satz von Einschränkungen mindestens eine Einschränkung, die auf einem Zielweg (2) basiert, der zu einem vorhergehenden Zeitschritt erzeugt wurde, umfasst;

wobei die mindestens eine Einschränkung, die auf dem Zielweg basiert, der zu dem vorhergehenden Zeitschritt erzeugt wurde, zwei seitliche Begrenzungen (7a, 7b, 8a, 8b) umfasst, die sich von dem Zielweg, der zu dem vorhergehenden Zeitschritt erzeugt wurde, in eine Fahrtrichtung des Fahrzeugs erstrecken;

wobei eine Fläche zwischen den zwei seitlichen Begrenzungen (7a, 7b, 8a, 8b) eine zulässige Fläche definiert, innerhalb der zugelassen ist, dass mindestens ein Abschnitt des Zielwegs zu dem Zeitschritt t gebildet wird;

wobei die zwei seitlichen Begrenzungen (7a, 7b, 8a, 8b) einen ersten Abschnitt (7a, 8a) aufweisen, der eine Längserstreckung parallel zu dem Zielweg aufweist, der zu dem vorhergehenden Zeitschritt erzeugt wurde, und wobei die zwei seitlichen Begrenzungen einen zweiten Abschnitt (8a, 8b) aufweisen, der eine Form aufweist, die auf einer vordefinierten Funktion entlang einer Kursrichtung des Fahrzeugs innerhalb der befahrbaren Fläche basiert, wobei der zweite Abschnitt (8a, 8b) der zwei seitlichen Begrenzungen (7a, 7b, 8a, 8b) eine trichterförmige Ausdehnung entlang der Kursrichtung des Fahrzeugs innerhalb der befahrbaren Fläche aufweist, wobei die trichterförmige Ausdehnung so angeordnet ist, dass sie sich mit zunehmendem Abstand vom Fahrzeug erweitert.

2. Verfahren (400, 500) nach Anspruch 1, das ferner Folgendes umfasst:
wenn der Abschnitt des Zielwegs zu Zeitschritt t nicht innerhalb der zulässigen Fläche zwischen den zwei seitlichen Begrenzungen (7a, 7b, 8a, 8b) gebildet werden kann, Erhöhen eines Abstands zwischen den seitlichen Begrenzungen, bis der Abschnitt des Zielwegs innerhalb der zulässigen Fläche gebildet werden kann.

3. Verfahren (400, 500) nach einem der vorhergehenden Ansprüche, wobei die mindestens eine Einschränkung, die auf einem Zielweg basiert, der zu einem vorhergehenden Zeitschritt erzeugt wurde, auf einem Zielweg basiert, der zu einem unmittelbar vorhergehenden Zeitschritt t-1 erzeugt wurde.

4. Verfahren (400, 500) nach einem der vorhergehenden Ansprüche, wobei der vordefinierte Satz von Einschränkungen ferner mindestens eines von einem minimalen Wenderadius des Fahrzeugs, einer Länge des Fahrzeugs, einer Breite des Fahrzeugs, einer Höhe des Fahrzeugs, einer Bodenfreiheit des Fahrzeugs und mindestens einer Fahrstreifenbegrenzung umfasst.

5. Computerlesbares Speichermedium, das ein oder mehrere Programme speichert, die dazu konfiguriert sind, durch einen oder mehrere Prozessoren eines Fahrzeugsteuerungssystems ausgeführt zu werden, wobei das eine oder die mehreren Programme Anweisungen zum Durchführen des Verfahrens (400, 500) nach einem der vorhergehenden Ansprüche umfassen.

6. Steuervorrichtung (10) zur Wegplanung für ein autonomes oder halbautonomes Fahrzeug (1), wobei die Steuervorrichtung (10) Steuerschaltungen (11) umfasst, die zu Folgendem konfiguriert sind:

Erlangen einer befahrbaren Fläche einer Umgebung des Fahrzeugs (1);

Erzeugen eines Zielwegs (3) innerhalb der befahrbaren Fläche zu einem Zeitschritt t basierend auf einem vordefinierten Satz von Eigenschaften für den Zielweg und einem vordefinierten Satz von Einschränkungen, wobei der vordefinierte Satz von Eigenschaften mit Komfortaspekten des Zielwegs verbunden ist und wobei der vordefinierte Satz von Eigenschaften mindestens eines von einem Ebenheitsgrad des Zielwegs, einem Abstand zur Mitte des Fahrstreifens und einer Länge des Zielwegs umfasst;

wobei die Steuerschaltungen (11) ferner dazu konfiguriert sind, den Zielweg (2) innerhalb der befahrbaren Fläche zu dem Zeitschritt t durch Folgendes zu erzeugen:

Berechnen einer Kostenfunktion, die den vordefinierten Satz von Eigenschaften für den Zielweg (3) umfasst;
Berechnen des vordefinierten Satzes von Einschränkungen, wobei der vordefinierte Satz von Einschränkungen ferner mindestens eine Einschränkung, die auf einer Begrenzung der befahrbaren Fläche basiert, und mindestens eine Einschränkung, die auf Fahrzeugeigenschaften basiert, umfasst;
Lösen eines Optimierungsproblems basierend auf der berechneten Kostenfunktion und dem berechneten vordefinierten Satz von Einschränkungen; und
Bilden des Zielwegs (3) basierend auf dem gelösten Optimierungsproblem;
**dadurch gekennzeichnet, dass** der vordefinierte Satz von Einschränkungen mindestens eine Einschränkung, die auf einem Zielweg (2) basiert, der zu einem vorhergehenden Zeitschritt erzeugt wurde, umfasst;
wobei die mindestens eine Einschränkung, die auf dem Zielweg basiert, der zu dem vorhergehenden Zeitschritt erzeugt wurde, zwei seitliche Begrenzungen (7a, 7b, 8a, 8b) umfasst, die sich von dem Zielweg, der zu dem vorhergehenden Zeitschritt erzeugt wurde, in eine Fahrtrichtung des Fahrzeugs erstrecken;
wobei eine Fläche zwischen den zwei seitlichen Begrenzungen (7a, 7b, 8a, 8b) eine zulässige Fläche definiert, innerhalb der zugelassen ist, dass mindestens ein Abschnitt des Zielwegs zu dem Zeitschritt t gebildet wird;
wobei die zwei seitlichen Begrenzungen (7a, 7b, 8a, 8b) einen ersten Abschnitt (7a, 8a) aufweisen, der eine Längserstreckung parallel zu dem Zielweg, der zu dem vorhergehenden Zeitschritt erzeugt wurde, aufweist, und wobei die zwei seitlichen Begrenzungen einen zweiten Abschnitt (8a, 8b) aufweisen, der eine Form aufweist, die auf einer vordefinierten Funktion entlang einer Kursrichtung des Fahrzeugs innerhalb der befahrbaren Fläche basiert, wobei der zweite Abschnitt (8a, 8b) der zwei seitlichen Begrenzungen (7a, 7b, 8a, 8b) eine trichterförmige Ausdehnung entlang der Kursrichtung des Fahrzeugs innerhalb der befahrbaren Fläche aufweist, wobei die trichterförmige Ausdehnung so angeordnet ist, dass sie sich mit zunehmendem Abstand vom Fahrzeug erweitert.

7. Fahrzeug (1), das Folgendes umfasst:
ein Wahrnehmungssystem (66), das mindestens einen Sensor (67a-c) zur Überwachung einer Umgebung des Fahrzeugs umfasst; eine Steuervorrichtung (10) nach Anspruch 6.

**Revendications**

1. Procédé (400, 500) de planification de trajectoire pour un véhicule autonome ou semi-autonome, le procédé comprenant :

l'obtention (402a-d) d'une zone de conduite d'un environnement proche du véhicule ;
la génération (403a-d, 502) d'une trajectoire cible dans la zone de conduite à un instant t sur la base d'un ensemble prédéfini de caractéristiques pour la trajectoire cible et d'un ensemble prédéfini de contraintes, dans lequel l'ensemble prédéfini de caractéristiques est lié à des aspects de confort de la trajectoire cible, et dans lequel l'ensemble prédéfini de caractéristiques comprend au moins un niveau de régularité de la trajectoire cible, une distance jusqu'au centre de la voie, et une longueur de la trajectoire cible ;
dans lequel l'étape de génération (403a-d, 502) de la trajectoire cible à l'intérieur de la zone de conduite à l'instant t comprend :

le calcul (503) d'une fonction de coût, dans lequel la fonction de coût est une représentation mathématique de l'ensemble prédéfini de caractéristiques pour la trajectoire cible ;
le calcul (506) de l'ensemble prédéfini de contraintes, dans lequel l'ensemble prédéfini de contraintes comprend en outre au moins une contrainte sur la base d'une limite de la zone de conduite et au moins une contrainte sur la base des caractéristiques du véhicule ;
la résolution (511) d'un problème d'optimisation sur la base de la fonction de coût calculée et de l'ensemble prédéfini de contraintes calculé ; et
la formation (512) de la trajectoire cible sur la base du problème d'optimisation résolu ;
**caractérisé en ce que** l'ensemble prédéfini de contraintes comprend au moins une contrainte sur la base d'une trajectoire cible (2) générée à un pas de temps précédent ; dans lequel l'au moins une contrainte sur la base de la trajectoire cible générée au pas de temps précédent comprend deux limites latérales (7a, 7b, 8a, 8b) s'étendant de la trajectoire cible générée au pas de temps précédent vers une direction de déplacement du véhicule ;

dans lequel une zone entre les deux limites latérales (7a, 7b, 8a, 8b) définit une zone autorisée à l'intérieur de laquelle au moins une partie de la trajectoire cible à l'instant t peut être formée ; dans lequel les deux limites latérales (7a, 7b, 8a, 8b) ont une première partie (7a, 8a) ayant une extension longitudinale parallèle à une trajectoire cible générée au pas de temps précédent, et **en ce que** les deux limites latérales ont une seconde partie (8a, 8b) ayant une forme sur la base d'une fonction prédéfinie le long d'une direction de déplacement du véhicule à l'intérieur de la zone de conduite, la seconde partie (8a, 8b) des deux limites latérales (7a, 7b, 8a, 8b) ayant une extension en forme d'entonnoir le long de la direction de déplacement du véhicule à l'intérieur de la zone de conduite, l'extension en forme d'entonnoir étant agencée de manière à s'étendre en s'éloignant du véhicule.

2. Procédé (400, 500) selon la revendication 1, comprenant en outre :
si la partie de la trajectoire cible à l'étape de l'instant t ne peut pas être formée dans la zone autorisée entre les deux limites latérales (7a, 7b, 8a, 8b), l'augmentation de la distance entre les limites latérales jusqu'à ce que la partie de la trajectoire cible puisse être formée dans la zone autorisée.

3. Procédé (400, 500) selon l'une quelconque des revendications précédentes, dans lequel l'au moins une contrainte sur la base d'une trajectoire cible générée à un pas de temps précédent est basée sur une trajectoire cible générée à un pas de temps t-1 directement précédent.

4. Procédé (400, 500) selon l'une quelconque des revendications précédentes, dans lequel l'ensemble prédéfini de contraintes comprend en outre au moins l'un parmi un rayon de braquage minimum du véhicule, une longueur du véhicule, une largeur du véhicule, une hauteur du véhicule, une garde au sol du véhicule et au moins une limite de voie.

5. Support de stockage lisible par ordinateur stockant un ou plusieurs programmes configurés pour être exécutés par un ou plusieurs processeurs d'un système de commande de véhicule, le ou les programmes comprenant des instructions pour l'exécution du procédé (400, 500) selon l'une quelconque des revendications précédentes.

6. Dispositif de commande (10) pour la planification de trajectoire pour un véhicule autonome ou semi-autonome (1), le dispositif de commande (10) comprenant un circuit de commande (11) configuré pour :

obtenir une zone de conduite d'un environnement proche du véhicule (1) ;
générer une trajectoire cible (3) à l'intérieur de la zone de conduite à un instant t sur la base d'un ensemble prédéfini de caractéristiques pour la trajectoire cible, et d'un ensemble prédéfini de contraintes, dans lequel l'ensemble prédéfini de caractéristiques est lié à des aspects de confort de la trajectoire cible, et dans lequel l'ensemble prédéfini de caractéristiques comprend au moins un niveau de régularité de trajectoire cible, une distance jusqu'au centre de la voie et une longueur de trajectoire cible ;
dans lequel le circuit de commande (11) est en outre configuré pour générer la trajectoire cible (2) à l'intérieur de la zone de conduite à l'instant t par :

le calcul d'une fonction de coût comprenant l'ensemble prédéfini de caractéristiques pour la trajectoire cible (3) ; le calcul de l'ensemble prédéfini de contraintes, dans lequel l'ensemble prédéfini de contraintes comprend en outre au moins une contrainte sur la base d'une limite de la zone de conduite et au moins une contrainte sur la base des caractéristiques d'un véhicule ;
la résolution d'un problème d'optimisation sur la base de la fonction de coût calculée et de l'ensemble prédéfini de contraintes calculé ; et
la formation de la trajectoire cible (3) sur la base du problème d'optimisation résolu ;
**caractérisé en ce que** l'ensemble prédéfini de contraintes comprend au moins une contrainte sur la base d'une trajectoire cible (2) générée à un pas de temps précédent ; dans lequel l'au moins une contrainte basée sur la trajectoire cible générée au pas de temps précédent comprend deux limites latérales (7a, 7b, 8a, 8b) s'étendant de la trajectoire cible générée au pas de temps précédent vers une direction de déplacement du véhicule ;
dans lequel la zone entre les deux limites latérales (7a, 7b, 8a, 8b) définit une zone autorisée à l'intérieur de laquelle au moins une partie de la trajectoire cible au pas de temps peut être formée ;
dans lequel
les deux limites latérales (7a, 7b, 8a, 8b) ont une première partie (7a, 8a) ayant une extension longitudinale parallèle à une trajectoire cible générée au pas de temps précédent, et **en ce que** les deux limites latérales ont une seconde partie (8a, 8b) ayant une forme sur la base d'une fonction prédéfinie le long d'une direction de déplacement du véhicule à l'intérieur de la zone de conduite, la seconde partie (8a, 8b) des deux limites latérales (7a, 7b, 8a, 8b) ayant une extension en forme d'entonnoir le long de la direction de déplacement du véhicule à l'intérieur de la zone de conduite, l'extension en forme d'entonnoir étant agencée de manière à s'étendre en s'éloignant du véhicule.

7.  Véhicule (1) comprenant :

    un système de perception (66) comprenant au moins un capteur (67a-c) pour la surveillance d'un environnement proche du véhicule ;
    un dispositif de commande (10) selon la revendication 6.

Fig. 1 (Prior art)

Fig. 2

Fig. 3

Fig. 4

EP 3 786 587 B1

Fig. 5

*Fig. 6*

**EP 3 786 587 B1**

## REFERENCES CITED IN THE DESCRIPTION

### Patent documents cited in the description

- US 20180356819 A1
- US 2019011910 A1